# EUROPEAN PATENT SPECIFICATION

(11) **EP 2 320 316 B1**
(45) Date of publication and mention of the grant of the patent: **20.06.2018**
(21) Application number: 10178854.5
(22) Date of filing: 23.09.2010
(51) Int. Cl.: G06F 9/451

(54) **A framework to support application context and rule based UI-control**
Rahmen zur Unterstützung einer Anwendungskontext- und Regel-basierten Benutzerschnittstellensteuerung
Cadre prenant en charge le contexte d'application et contrôle d'interface utilisation basé sur des règles

(30) Priority: 29.09.2009 US 568890
(43) Date of publication of application: 11.05.2011
(73) Proprietor: SAP SE, 69190 Walldorf (DE)
(72) Inventor: Teng, Gang, 69190 Walldorf (DE); Wie, Guochen, 69190 Walldorf (DE); Yin, Tao, 69190 Walldorf (DE); Zhang, Huiming, 69190 Walldorf (DE)
(74) Representative: Richardt Patentanwälte PartG mbB

(56) References cited:
- WO-A2-2009/063441
- US-A1- 2007 174 760
- US-A1- 2010 257 196

## Description

### Field of the invention

The disclosure relates to a system and method for providing user interface (Ul) control for software applications, in particular, UI control based on application context and rules.

### BACKGROUND

Modern enterprises such as governmental organizations and private businesses typically use computer systems to manage their operations. Software applications designed to run on these computer systems may have a variety of user interfaces. In some situations, one software application that involves user interactions may need to vary the user interface according to different user groups, business units and/or operations to be performed, etc. For example, a tax processing application may have only one backend tax engine but may have different Uls according to different types of taxes being processed (e.g., personal income tax, corporate tax, sales tax). Therefore, in some cases, after a business software application is delivered to a customer, the customer may need to customize the Ul layout and UI element properties according to the customer's specific business requirements, which cannot be covered by the business application out of the box.

Typically, when a software application is delivered, the application user interface is fixed. In some cases, the software vendor may provide some a plurality of user interface templates for a software application so the software application may have different Uls by default for different business requirements. However, using current technology, neither the fixed UI nor the default Uls can fulfill all specific requirements of customers. Efforts to change the situation have not been successful so far for several reasons. First, from a software application developer's point of view, it is difficult to foresee all customer requirements for UI layout and/or Ul display properties during the development phase of a software application for all potential customers. It is either too expensive or too many different preferences or even requirements for Uls by a large amount of customers. Second, some UI changes are business-context related. When a new business requirement arises, UI changes may be needed. These UI changes cannot be foreseen before the business application is delivered. Third, the business application may be improved continuously after delivery to a customer, that is, Ul changes may be needed with the continuous usage of the business application.

Therefore, presently, any changes for a user interface of a delivered software application beyond the templates provided by default is difficult and need involvement of a software developer to re-program the software application (e.g., change software code of the software application). Accordingly, there is a need in the art for providing user interface (Ul) control for software applications that can adapt to customers' needs without application developers' involvement or coding changes after the software applications have been delivered to customers.

### Summary of the invention

According to embodiments of the invention, a method for providing rule based user interface (UI) control is provided according to claim 1.

In an advantageous aspect, embodiments of the invention provide highly flexible graphical user interfaces which can be dynamically adapted in dependence on the current context of a software application. Although some embodiments of the present invention are described in the following by making reference to software applications in the business-context, the present invention likewise provides a highly beneficial and flexible graphical user interface for application in technical software systems, e.g. software modules steering the manufacturing of goods, controlling laboratory devices and the like.

In a further aspect, embodiments of the invention provide for a machine-readable medium according to claim 2.

A rule as used herein is a computer-interpretable statement with two parts: an if-clause and a then- clause, whereby the then-clause is only executed in case the if-clause returns the Boolean value 'true'.

The configuration time as used herein is the time when the rules are specified and assigned to one or more UI elements. The term 'run time' refers to a point in time when the application is executed.

According to embodiments of the invention, the rule takes into consideration of context information.

According to further embodiments, the context information is implemented in software data objects.

According to further embodiments, the context information includes application parameters and business context available for the UI element.

According to embodiments of the invention, the rules are created using a design-time environment at configuration time of the software application, and the rule engine also persists logic controlling the software application UI. The expression 'to persist logic controlling the application UI' implies storing computer-interpretable instructions in a data storage area, whereby said instructions define and control the appearance and/or behavior (the 'logic of operation') of a software application UI.

According to further embodiments, the design-time environment is a what you see is what you get (WYSIWYG) design-time environment. According to embodiments, said design-time environment further includes functions for binding, rebinding, and/or removing the rule for the UI element.

According to further embodiments, the rule engine persists the rule in at least one of the following formats: a decision table, a decision tree and a formula.

According to further embodiments, the UI element is coded in a building block capable of being reused in another software application. Said building block can be, for example, a text block specified in XML or any other markup language suited for importing, exporting and exchanging data between different software applications.

According to embodiments, the design-time configuration tool is used to configure an application and includes a panel displaying an application hierarchy and a window for creating a rule for said application. The application hierarchy comprises a root application configuration, the root application configuration being used as template for creating further application configurations. According to embodiments of the invention, the root application configuration comprises an instance of the application configuration, said instance comprising one or more different variants of the root application configuration, each variant corresponding to a different UI layout. An application hierarchy is a hierarchy of application configurations and/or application configuration instances displayed to a user.

### BRIEF DESCRIPTION OF THE DRAWINGS

In the following, embodiments of the invention are described by way of example, only making reference to the drawings in which:
FIG. 1 is a block diagram according to an exemplary embodiment of the present invention.
FIG. 2 is a process diagram for creating and maintaining rules for a business application in design-time according to an exemplary embodiment of the present invention.
FIG. 3 is a process diagram for creating and changing a social service plan according to an exemplary embodiment of the present invention.
FIG. 4 illustrates a display of a design-time configuration tool according to an exemplary embodiment of the present invention.
FIG. 5 illustrates another display of the design-time configuration tool according to an exemplary embodiment of the present invention.
FIG. 6 is an exemplary system implementation according to an exemplary embodiment of the present invention.
FIG. 7 is another exemplary system implementation according to an exemplary embodiment of the present invention.
FIG. 8 shows a structure of a computer running a rule-based UI control framework according to an exemplary embodiment of the present invention.
FIG. 9 shows a multi-tier computer system for a rule-based Ul control framework according to an exemplary embodiment of the present invention.

### DETAILED DESCRIPTION

Embodiments of a method and system provide a rule based user interface control for a software application user interface. At configuration time of an installed software application, the method may provide a design-time environment for defining a rule for a UI element to be displayed in the software application. The rule may affect a value of a property of the UI element. The method may further persist the rule in a rule engine. Then at runtime, upon receiving from the software application a request to determine the value of the property of the UI element, the method may retrieve the rule from the rule engine by a runtime service, evaluate the rule to determine the value for the property of the UI element and set the value for the property according to the evaluated rule. The runtime service is executed at runtime of the application 102. Next, the method may return the set value for the property to the software application for displaying the UI element according to the set value.

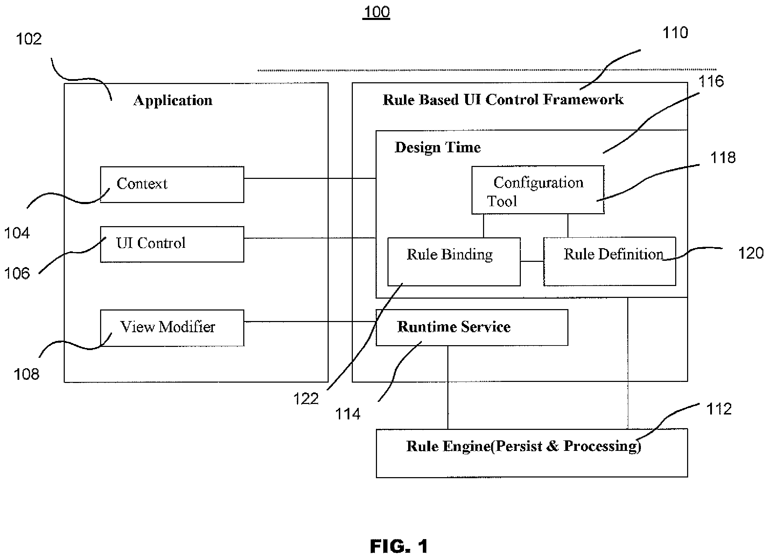

FIG. 1 illustrates an exemplary software system 100 according to the present invention. The software system 100 may comprise an application 102, a rule based UI control framework 110 and a rule engine 112. The application 102 may be a business application that interacts with users (e.g. display or change a sales order). The application 102 may comprise a context 104, an UI control 106 and a view modifier 108. The context 104 may represent application related data (e.g., a data object containing application related data). The application related data may be provided by application logic (e.g., logic implemented for pertinent tasks to be performed by the application) and consumed by presentation logic (e.g., logic implemented to determine how user interface elements may be presented). The UI control 106 may define how the user interface looks like (e.g., which UI elements are displayed and how they are displayed relating each other). The UI control 106 accordingly controls the 'layout' of the user interface. The view modifier 108 may be used to visualize the application during runtime (e.g., rendering the display). The view modifier 108 may be responsible for selecting a correct UI layout, triggering data initialization, executing input processing, creating and rendering a view instance.

The view modifier 108 and the UI control 106 are, according to embodiments of the invention, software modules. The context 104 represents application related data and is therefore also referred to as 'context information'.

In one exemplary embodiment, the application 102 may be implemented based on a model view controller (MVC) design pattern to ensure a clear distinction between application logic and presentation logic. The MVC design pattern may allow a software application to compartmentalize the user interface, business logic, and flow logic so these components of the software application can be readily reused and more easily maintained. The UI control 106 and UI element properties may be defined in the view part of the pattern and the view modifier 108 may be implemented as a controller.

According to embodiments of the invention, the 'view part' relates to one or more program modules and/or corresponding program instructions specifying the properties and the layout of the UI while 'controller' relates to one or more program modules and/or corresponding program instructions for controlling said properties.

The rule based UI control framework 110 may comprise a design-time environment 116 and a runtime service 114. The design-time environment 116 may comprise design-time tools such as a configuration tool 118, a rule definition 120 and a rule binding 122. In design-time, the design-time environment 116 may facilitate creation of rules that control how UI elements may be displayed in the application 102. In runtime, the runtime service 114 may execute the created rules to determine values of the properties associated with the UI elements. The configuration tool 118 may comprise a user interface that helps a user to create rules. The rule definition 120 may help defining what conditions need to be included in a rule. For example, the rule definition 120 may provide a user with a set of predefined conditions to be modified by the user according to his specific requirements. The rule definition may likewise comprise a syntax and/or logic check functionality guaranteeing that a specified rule can be correctly interpreted and processed and/or does not violate business rules.

In one embodiment, a rule may be defined to take into consideration of application contexts, and may affect a UI property of a corresponding UI element. The application contexts may include application parameters and business contexts. Application parameters may include data applicable to the application as a whole. For example, a shared application may contain an application parameter tracking how many users currently are logged in, an application parameter representing a system time, and/or an application parameter representing a current user. The business context may be data objects representing relevant data for business operations. For example, in a flight booking application, information corresponding to flight may be considered as business context, such as, but not limited to, carrier ID, flight number, departure and arrival time and destination, etc. In an expense claiming application, information such as, but not limited to, expense type, amount, currency and place may be considered as business context. Accordingly, for example, in an application for air travel management, a rule may be defined as "if carrier id = LH(Lufthansa), then set the UI element as read-only" (LH may be short hand id for Lufthansa); in another application for customer relationship management, a rule may be defined as "if business partner is 'BP1' and contract object is 'CO1,' then set the UI element visible but read only."

Once a rule is defined in the rule definition 120, the rule binding 122 may assign (e.g., bind) the rule to a UI element by defining a linkage between the newly defined rule and the UI element. According to embodiments of the invention, binding rules to UI elements is technically achieved via a link, a pointer, an entry in a relational database assigning a rule to a UI element e.g. via primary keys, a human- and/or machine readable file comprising assignments between rules and UI element identifiers or the like. An association/binding of a rule and a UI element can be removed accordingly by removing e.g. an entry in an association table of a relational database, removing an association specified in a file and the like. The rules bound to one or more UI elements can be stored in association with said UI elements to a storage area. To store a rule in association with a UI element may comprise, e.g., storing the rules and UI elements or their respective identifiers, e.g. keys or Hash values, together to a data storage e.g. in the form of a table of a database or in the form of a binary file comprising a Hash Map.

The rule engine 112 may provide a storage for storing the defined rules and assignment (binding) of the defined rules to UI elements. As shown in Figure 1, the rule definition 120 may be coupled to the rule engine 120, thus, once a rule is defined, it may be processed and persisted in the rule engine 112. The expression 'to be persisted in the rules engine 112' implies that the rule engine 112 stores the rules in a data storage accessible by said rules engine. In one embodiment, the application 102 may be a compiled desktop software application. For example, the application 102 may be the client portion of a client-server application with the rule based UI control framework 110 and the rule engine 112 as the server portion. In another embodiment, the application 102 may be a portal application implemented in a browser like display (e.g., HTML displayed in a browser type of user interface). For example, the application 102, the rule based UI control framework 110 and the rule engine 112 may be implemented as a three-tier application. The application 102 may be the first tier interfacing users, the rule based UI control framework 110 may be a middle tier performing business processes and the rule engine 112 may be the back end tier for data storage. The three tiers may be deployed on one physical machine or spread out into multiple machines (e.g., the application 102 on a web server, the rule based UI control framework 110 on an application server and the rule engine on a data server.)

The rule based UI control framework 110 may control the application user interface based on the rules. In design-time, a user may use the design-time tools of the design-time environment 116 to configure and assign rules to UI elements in a view (e.g., a display of a UI) of the application 102. Defined rules may be persisted in the rule engine 112. In runtime, before displaying the view, the view modifier 108 of the application 102 may send the runtime service 114 a list of UI elements to be displayed in the view. In response, the runtime service 114 may retrieve defined rules associated with (e.g., assigned to) each UI element in the list from the rule engine 114 and evaluate the retrieved rules. Based on the evaluation result, the view modifier 108 in the application 102 may set the values for the properties of corresponding Ul elements to be displayed accordingly.

In embodiments, a rule may be implemented in a decision table, decision tree, formula or any other rule type provided by the rule engine 112. For example, an decision table may be used to define a rule where a selected application context may be used as a source to determine the UI property of a UI element. Embodiments of the present invention may define rules to take any view and/or controller context into consideration as a part of impacting facts for UI element properties (e.g. visible/invisible, mandatory/optional, enable/disable etc). A property of an UI element may determine its layout and/or its behavior, e.g. its dynamic behavior in dependence on the current context and/or current input data values. In one embodiment, by using different rule expression types (e.g. decision table or formula), users of the design-time tools may determine how the context will affect UI element properties by maintaining content of a defined rule in the rule engine 112. Different user groups may provide their own rules for UI logic in the view to satisfy their own needs.

According to embodiments of the invention, a decision table can be a set of one or more tables in a relational database or an assignment table stored e.g. as ASCII or binary file. A decision tree as used herein encompasses any hierarchical data structure organizing and storing rules in a hierarchical way, e.g. in the form of a hierarchical acyclic graph. A formula as used herein is an expression of a rule specified according to a particular syntax, e.g. SQL, which may also comprise a mathematical expression, e.g. within the if-clause of the rule.

In one embodiment, the rule definition 120 may take advantage of rule engine to model the presentation logic of UI layout by rules instead of using program code. The input of the rule may be the business context (e.g., relevant business data (Lufthansa as a carrier vs. to use American Airline as the carrier) for an operation of the application (e.g., displaying flight information)) or application parameters (e.g., system time, current user), and output the rule may be UI elements properties' values.

In one embodiment, the configuration tool 118 may be implemented as a what you see is what you get (WYSIWYG) design environment. Implementation may be achieved via, for example, an application programming interface (API) of an application development environment. In one embodiment, the configuration tool 118 may retrieve a Ul layout for the application 102, determine a MVC context, evaluate application parameters and UI element properties for a view of the application 102. By using the information retrieved, the configuration tool 118 can visualize the application 102's view and UI layout in a way of WYSIWYG (e.g., display the UI layout and corresponding UI elements accordingly in the configuration tool 118). Therefore, using the configuration tool 118, for each Ul element, a user can choose a corresponding application parameter and/or business context and/or MVC context that may contribute to certain UI element property (e.g. visible/invisible) and determine how the UI element looks in the view of the application 102. In one exemplary embodiment, a decision table in rule engine 112 may be used. In this decision table, the source fields may be selected context(s) and target fields may be selected UI element properties. Different users may maintain the decision table values according to their own business requirements. The decision table together with it's content may be persisted by the rule engine 112. The rule based UI control framework 110 may act as a bridge that links the application 102 and the rule engine 112, and may extend the flexibility of UI control for the application 102.

Design-time tools (e.g., the configuration tool 118, the rule binding 112 and the rule definition 120) of the design-time environment 116 may provide the functionalities to assign/reassign/remove a rule to certain UI element. In one embodiment, instead of or in addition to a WYSIWYG design environment, a testing mode may be provided to check the runtime behavior on how assigned (e.g., bound) rules affect an application UI.

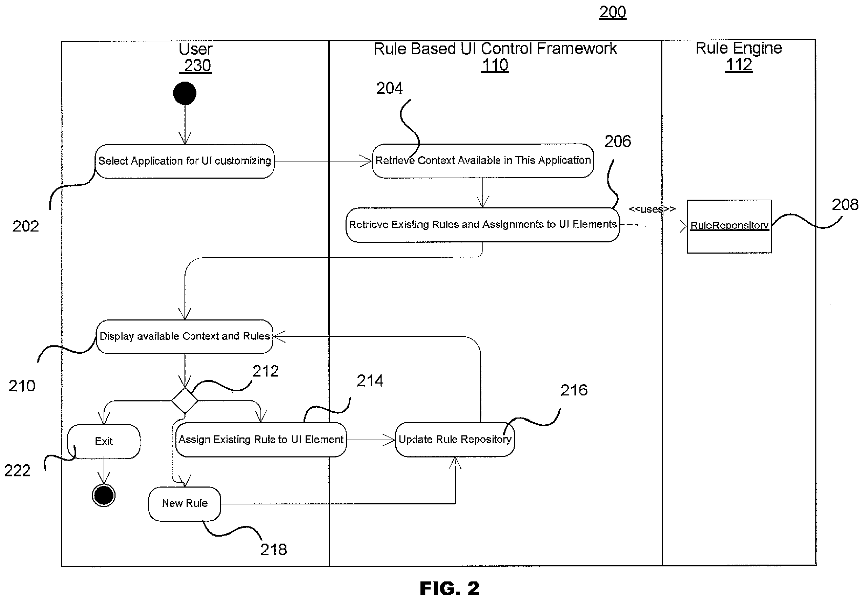

FIG. 2 illustrates user interactions for creating and maintaining rules for a business application at design-time according to an exemplary embodiment of the present invention. It should be noted that the design-time is a configuration time that the software application has been developed or even deployed, but not the time that the software application is still under development. In an action 202, a user 230 may select an application he/she wants to influence (e.g., modify) the UI behavior of. The rule based UI control framework 110 may be triggered by the action 202 and may perform a function 204 to retrieve existing context available in the application. In one embodiment, the existing context may include all available information designed for the selected application. The information may influence the UI behavior at runtime of the selected application and may be represented by context objects (e.g., software data objects). In one or more embodiments, the user 230 may be a software application developer, an administrator administering the application in a deployed working environment (e.g., an information system administrator at a customer site), or an end user using the application.

After the function 204 to retrieve existing context available in the application, the rule based UI control framework 110 may perform another function 206 to retrieve existing rules and the assignments for each rule assigned to UI elements stored in a rule repository 208 that may locates in a rule engine 112. Thereafter, at a step 210, the available context objects and rules may be displayed to the user 230 to let the user 230 to take an overview of existing rules/assignments.

The user 230 may decide at a decision step 212 to take one of the following actions: to create a new rule 218, to assign an existing rule to a UI element 214, or to exit 222. If the user 230 selects to create a new rule 218, a design interface (e.g., the configuration tool 118) for the new rule may be displayed and the user 230 may interact with the design interface to create a new rule. In one embodiment, creation of the new rule may also include assigning the new rule to at least one UI element. Upon finishing creating the new rule, the rule based UI control framework 110 may update the rule engine repository at a step 216. If the user 230 selects to assign an existing rule to the UI element 214, the user 230 may select existing rule(s) and assign the rule(s) to certain UI element(s). Upon finishing the action 214, the rule based UI control framework 110 may update the rule engine repository at the step 216. If the user 230 selects to exit 222, the user may have finished the interaction with the application and may end the application.

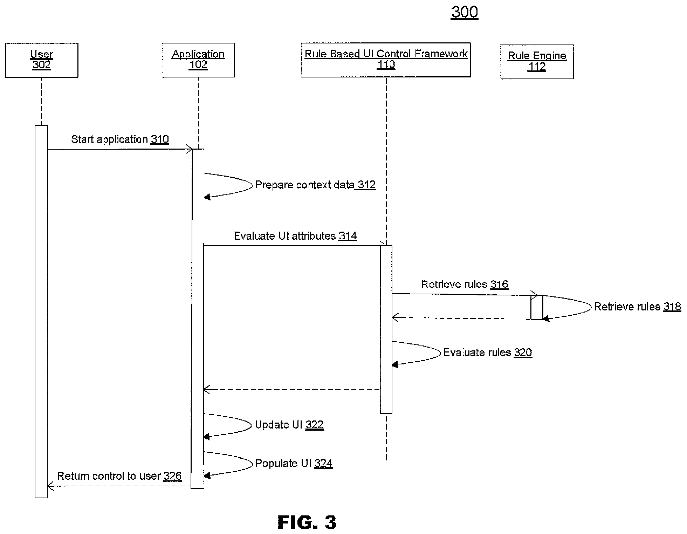

FIG. 3 illustrates a process 300 for loading and displaying a business software application according to an exemplary embodiment of the present invention. The process 300 may begin when a user 302 starts the application 102 in a step 310. The application 102 may prepare context data at a step 312, e.g. retrieve current user-, application or computer-system- specific information. The prepared context data may include any available information designed for the application 102 (e.g., user 302's log in id, user 302's accessing privilege defined in the application 102, operations the user 302 may be performing). As described above, the available information may be represented in context objects.

At step 314, the application 102 may evaluate the attributes for Ul elements to be displayed in a view of the application 102. The application 102 may invoke one or more run time services in the rule based UI control framework 110 (e.g., the runtime service 114 in FIG. 1) to perform UI control functions. At step 316, in response to the application 102's request, the rule based U! control framework 110 may determine rules associated with UI elements to be displayed from the rule engine 112. At step 318, the rule engine 112 may retrieve the rules at step 318 and return the rules to the rule based UI control framework 110. Next, at step 320, the rule based UI control framework 110 may evaluate the rules and return the evaluation results to the application 102. Then, at step 322, the application 102 may update the attributes of the UI elements according to evaluation result provided by the rule based UI control framework 110. Then, at step 324, the UI of the application 102 may be populated with the UI elements with attributes determined by the rules assigned to the UI elements. Finally, after the UI of the application 102 is rendered, the control of the application 102 may be returned to the user 302 for further actions.

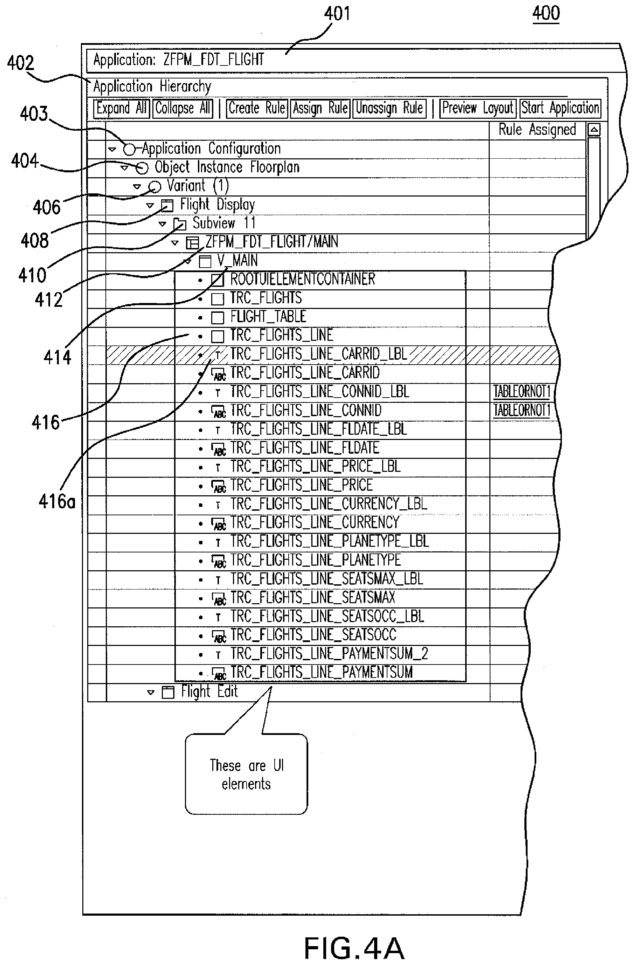

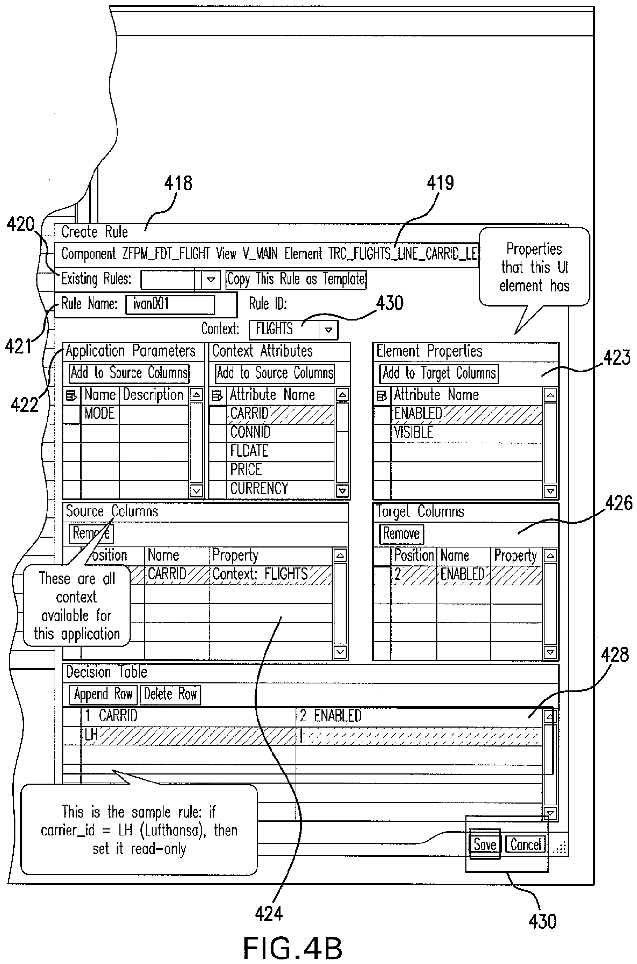

FIG. 4 illustrates a display of a user interface 400 for rule configurations at design-time according to an exemplary embodiment of the present invention. The design-time configuration tool 400 may be used to configure an application 401 (e.g., an airline business application code named as ZFPM_FDT_FLIGHT). The design-time configuration tool 400 may include a panel displaying an application hierarchy 402 and a window 418 for creating a rule for the application 401. The window 418 may be anchored to the application 401 (e.g., docked next to the panel displaying the application hierarchy 402) or floating (e.g., a pop up window that may be drag around on the user interface 400). In one embodiment, the application 401 may represent a software application including several components that may be configured together in specific layouts and/or steps.

The application hierarchy 402 may comprise application configuration 403 as a root. The application configuration 403 may be used as a configuration root template for a series or a variety of software products containing common components provided by a software company. The common components may be configured together to form a particular Ul layout. The application configuration 403 may comprise an instance 404 of the application configuration. The instance 404 may be one specific configuration for the application configuration 403. The instance 404 may comprise one or more variants 406 (only one shown) for the application configuration 403. Each variant 406 may contain configuration for a group of components in a specific layout and/or step. Thus, different variants 406 may correspond to different UI layouts. In one embodiment, a user may choose one variant to be displayed according to a business context at runtime.

The variant 406 may comprise a main view 408. The main view 408 may be referred to as the main view for a specific lay out (e.g., a main view in the airline business application ZFPM_FDT_FLIGHT/MAIN). The main view 408 may comprise a sub view 410. The sub view 410 may by a part of the main view 408 and may contain a subset of components to be displayed on the main view 408. In one embodiment, the sub view 410 may be a frame or a tab displayed in the main view 408. In one or more embodiments, the sub view 410 may be referred to as a container. The sub view 410 may comprise a component 412 for the sub view 410 and the component 412 may comprise a view 414 (e.g., a view coded named V_MAIN for the airline business application ZFPM_FDT_FLIGHT). The view 414 may comprise a list of elements 416 (e.g., including a UI element 416a) for the view 414. In one embodiment, the view 414 may be implemented as a view in the MVC pattern and each UI element may be implemented as a configurable building block and may be implemented in an object oriented programming language (e.g., Java or C#), or other suitable non-object oriented programming languages.

The window 418 may be a user interface for creating a rule and assignment. The window 418 may include an information label 419. The information label 419 may show the name of the component, the name of the view and the element associated with the rule being worked on. In one embodiment, the window 418 may be a pop up window when a user right clicks an element in the hierarchy 402 and invokes a "create a rule" command form the pop up menu, so these context information may be provided to the window 418 and displayed automatically. In the example shown in FIG. 4, the information label 419 may show the component 412 (e.g., ZFPM_FDT_FLlGHT), the view 414 (e.g., V_MAIN) and a specific element of the view 414 (e.g., the UI element 416a, a flights airline carrier id named "TRC_FLlGHTS_LINE_CARRID_LBL"). The window 418 may also comprise a drop down box 420 to allow a user to select an existing rule as a template. If an existing rule is selected, a button (not labeled) next to the drop down box 420 may be enabled to allow the user to copy the existing rule as a template (e.g., context objects to be considered and properties to be affected) for a new rule to be created. The window 418 may further comprise a text box 421 for the user to enter a name for the rule.

The window 418 may comprise a drop down box 430 to let the user to select a context that may be taken into consideration for the rule. Once the user selects a context (e.g., FLIGHTS), context attributes available for the selected context may be shown in an area 422 of the window 418. The area 422 may also show application parameters pertinent to the whole application 401 (e.g., current user, system time). In one embodiment, the business context and application parameters may be displayed side by side with the context attributes available for the selected context in the drop down box 430.

The window 418 may further include displays for element properties 423, source columns 424, target columns 426, a decision table 428 and functional buttons 430. The element properties 423 shows properties for a selected UI element (e.g., the UI element 416a selected in the view 414 from the hierarchy 402). The source columns 424 may contain source context objects. A source context object may be selected from either the application parameters or context attributes available for the selected context. For example, when the selected context is "FLIGHTS," a source context object "CARRID" may be selected from the list of the available context attributes shown in the area 422. The target columns may contain properties of the UI element to be affected. For example, "enabled" may be added to the target columns for the UI element 416a. Thus, a rule may be created and saved in the decision table 428. For example, "if carrier_id = LH (Lufthansa), then set it read-only." The decision table 428 may contain function buttons (e.g., add a row, delete a row). And the window 418 may also contain functional buttons (e.g., save, cancel). The window 418 may provide an easy way of rule customization based on a decision table.

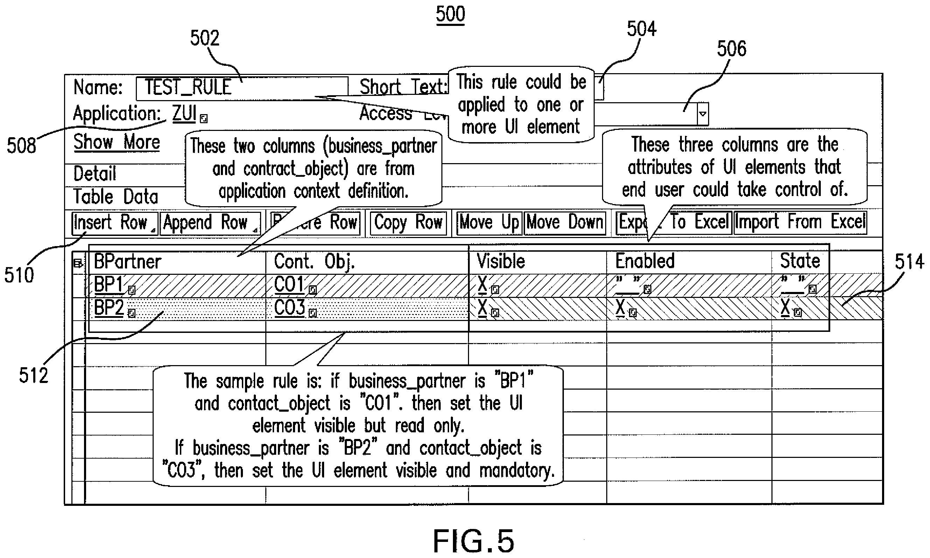

FIG. 5 illustrates a display of a rule engine workbench 500 according to an exemplary embodiment of the present invention. In one or more embodiments, a rule engine may provide a tool to display and facilitate configuration of rules stored at the rule engine. For example, the rule engine workbench 500 may be provided by a rule engine and thus provides a display of the rules from a rule engine perspective. The rule engine workbench 500 may comprise a rule name display 502 showing the rule's name, a short text 504 for a short description for the rule, an application label 508 for the software application the rule may be applied to and a drop down box 506 to specify an access level for a user.

Moreover, in a detailed display section, the rule engine workbench 500 may further comprise a plurality of functional buttons 510 for a decision table. The functional buttons include functions to manipulate data rows inside the decision table, for example, to insert a row, to append a row, to remove a row, to copy a row, to move a row up or down, to export data to an excel spreadsheet or to import data from an excel spreadsheet. The decision table may include context attributes 512 (e.g., application contexts or view contexts) and configurable properties 514. Each row in the decision table may represent how configurable properties of the UI element may be affected by the context attributes. For example, the sample rule represented in FIG. 5 may be "if business_partner is 'BP1' and contract_object is 'CO1', then set the UI element visible but read only, if business_partner is 'BP2' and contract_object is 'CO3', then set the UI element visible and mandatory." In the example shown, the context attributes 512 may contain two columns (e.g., for a business partner and a contract object) and the configurable properties 514 may contain three columns (e.g., visible, enabled, state (read only, mandatory, etc.)). However, in another embodiment, different number of columns for either the context attributes or the configurable properties, or both may be implemented.

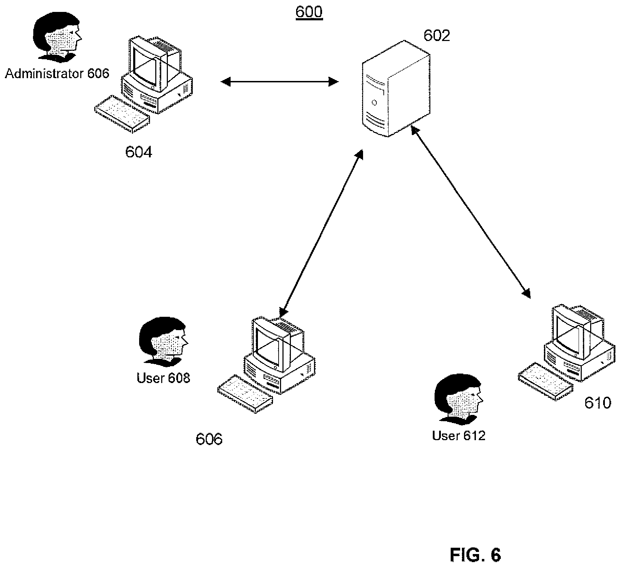

FIG. 6 is an exemplary system 600 implementation according to an exemplary embodiment of the present invention. In the exemplary system 600, a business application may be deployed to a business environment and installed on a server 602. An administrator 606 may connect to the server 602 from a workstation 604 and configure the business application for all users in a business unit that access the business application. Thereafter, users 608 and 612 may access the business application through their workstations 606 and 610 respectively. The user interface of the business application may be configured for business needs for users 608 and 612 based on the business unit they are in and access level they may have. In one embodiment, the user interface may be one common user interface for all users belong to the same business unit. In another embodiment, based on access level, UI elements may have different properties for different users (e.g., managers have more elements visible and enabled). The administrator 606 may be an information system administrator, a business partner, or a business administrator.

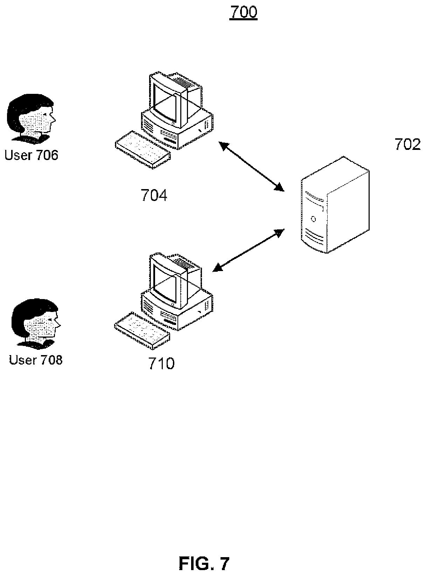

FIG. 7 is another exemplary system 700 implementation according to an exemplary embodiment of the present invention. In the exemplary system 700, a business application may be deployed to a business environment and installed on a server 702. Users 706 and 708 may access the business application through their workstations 704 and 710 respectively. Each user 706 or 708 may configure the user interface of the business application by creating rules satisfying their respective needs. Their personal configuration of UI may persisted in the rule engine as described above and the rules may be associated with their personal user id. Thus, each user 706 and 708 may have their own unique UI for the same business application running on a single server. In another embodiment, the business applications may be installed from the server 702 to each machines 704 and 710. However, this will not change the way the UI is controlled by storing the rules governing the UI control in a respective rule engine. The rule engine may be stored in the server 702 or respectively on workstations 704 and 710 to be with the business application.

In one or more embodiments, the business application implementing rule based UI control may be a composite application. In the composite application, each UI element may be implemented as a generic building block that may be used in a variety of applications. The UI element may be programmed (e.g., coded) using one of the objected programming languages, such as Java, C#, or scripting languages, such as Java script, PHP, or other suitable programming technologies, such as JSP, ASP.NET, Java Servlet. In one embodiment, the software vendor may create rules for UI elements and deliver the rules as part of the software application. In another embodiment, the software vendor may create rules for UI elements and deliver the rules as additional content for the software application. In this embodiment, no changes to the application or the rule based UI control framework need to be redeployed, just adding new content to the rule engine in a customer working site. In yet another embodiment, a rule may comprise a logic affecting one or more UI elements. The logic may determine the manner a UI element may be displayed (e.g., a group of UI elements and one UI element displayed after another in a view; a group of UI elements that each displayed relative to another with respect to time and/or position).

It should be noted that the rule-based UI control according to the present invention differs from the traditional software application that varies UI based on roles of operators. In the traditional software application, the logic that controls what should be shown for a particular role is typically programmed in the source code and compiled into the application. Thus, the logic is fixed during the development phase of the traditional software application. Further, for the traditional software application, operators with the same role will always get the same UI layout, even under different business contexts (e.g., using either Lufthansa or American Airline as the carrier wont' make any difference for the UI).

On the contrary, a software application based on the rule-based UI control according to the present invention may just enable the ability to vary UI according to rules. No rules need to be delivered with the software application. A customer can use the design-time configuration tool to define rules to meet whatever requirements (e.g., using Lufthansa as the carrier, the corresponding UI element may be read only; using American Airline as the carrier, the corresponding UI element may be editable). In one embodiment, users' roles may be part of the application parameter and/or business context and a customer may define rules according to users' roles and/or other business context information. But, still, the rules may be stored in the rule engine instead of compiled into the software application.

In one embodiment, the business application may be implemented based on rule engines, as known in the computer science field and provided by vendors such as SAP ® and the like. The business application may also be built using web technology. In one or more embodiments, the end users (e.g., governmental agencies, corporations and businesses) may customize the rules for UI elements in the business applications according to the present invention. The rules may be created and maintained by the end user. This allows the end user to modify any rules as changes occur in the criteria related to the business criteria. In addition, as new needs may arise, the end user may generate new rules.

Embodiments of the present invention may provide software applications that may control user interface based on application context and rules. In one embodiment, the rule based UI control framework may take advantage of rule engine to define and persist rules for UI element of business application. The Ul logic may be defined and encapsulated in the rule that is stored in a rule engine (e.g. by using common rule engine expressions like: decision table, decision tree, formula, etc). This framework can take application parameters and business context as decision factors for application UI layout and UI element properties. As UI control may be persisted and executed by rule engine, no programming enhancement is needed for application UI adjustment, changes can be delivered as rule engine content instead of code adjustment.

By using rule based UI control framework according to the present invention, business application developer, 3^{rd} party middleware provider and customer may enhance or differentiate application user interface to fulfill their specific business requirement. These kind of enhancement may be achieved code-free. Also, these kind of enhancement may still be flexible enough to also take into the consideration of application parameters and context.

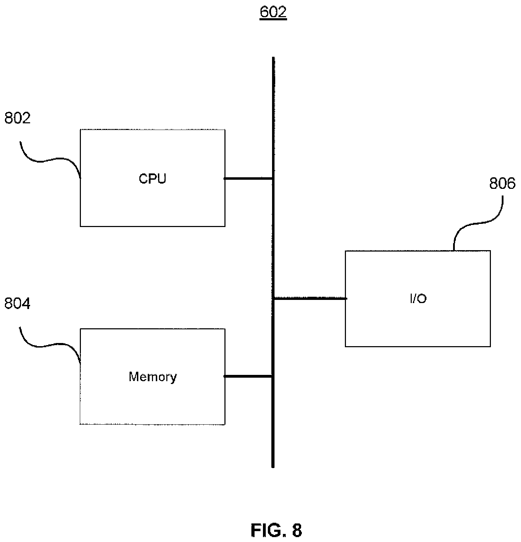

Figure 8 depicts a structure of a computer server 602 according to one embodiment of the invention. The computer server 602 includes a processor 802, memory 804, and an I/O device(s) 806. The processor 802 is connected to the memory 804 and I/O device(s) 806. These connections are direct or via other internal electronic circuitry or components.

The processor 802 is a programmable processor that executes instructions residing in the memory 804 to receive and send data via the I/O device(s) 806. The instructions may perform the operations of the application context and rule based UI control described herein. The term programmable processor as used herein is any programmable microprocessor or processor or combination of microprocessors or processors that can operate on digital data, which may be special or general purpose processors coupled to receive data and instructions from, and to transmit data and instructions to, a machine-readable medium. According to one embodiment of the present invention processor 802 is an Intel microprocessor.

Memory 804 is a machine-readable medium that stores data that is processed by processor 802. The term machine-readable medium as used herein is any addressable storage device that stores digital data including any computer program product, apparatus and/or device (e.g., a random access memory (RAM), read only memory (ROM), magnetic disc, optical disc, programmable logic device (PLD), tape, hard drives, RAID storage device, flash memory or any combination of these devices). This may include external machine-readable mediums that are connected to processor 802 via one or more I/O device(s) 806.

The I/O device(s) 806 may be one or more input/output interfaces that receive and/or send digital data to and from an external device. Interfaces as used herein are any point of access to an external device where digital data is received or sent, including ports, buffers, queues, subsets thereof, or any other interface to an external device.

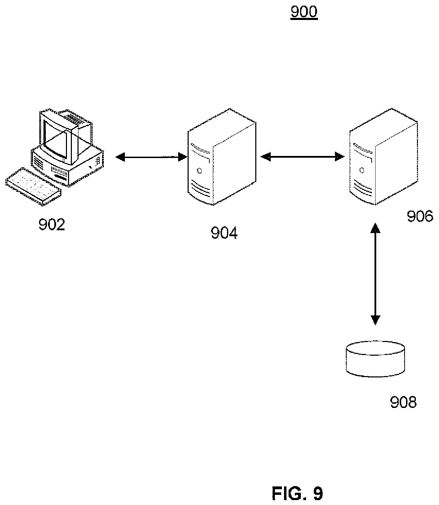

FIG. 9 shows a multi-tier computer system 900 for a rule-based UI control framework according to an exemplary embodiment of the present invention. As described above, in one embodiment, the application 102, the rule based UI control framework 110 and the rule engine 112 may be implemented as a three-tier application. The multi-tier computer system 900 may comprise a user terminal 902, a web server 904, an application server 906 and a database server 908. A portal application according to present invention may deployed on the web server 904 to be the first tier interfacing users. A rule based UI control framework according to the present invention may be deployed on the application server 906 to be the middle tier performing business processes and a rule engine may be deployed on the database server 908 to be the back end tier for data storage.

It should be understood that there exist implementations of other variations and modifications of the invention and its various aspects, as may be readily apparent to those of ordinary skill in the art, and that the invention is not limited by specific embodiments described herein. Features and embodiments described above may be combined with and without each other. It is therefore contemplated to cover any and all modifications, variations, combinations or equivalents that fall within the scope of the basic underlying principals disclosed and claimed herein.

## Claims

1. A method for providing rule based user interface (UI) control for a business software application (102), comprising:
- defining a rule for a UI element, said UI element to be displayed in the business software application, the business software application being a developed or deployed software application (102), the UI element being coded in a building block capable of being reused in another software application, the rule determining a value of a property of the UI element, the property specifying the layout of the UI element, the property being the visibility and/or the enabledness of said UI element,
- storing the rule by a rule engine to a storage medium, the rule being stored in association with said UI element the rule was defined for,
- at runtime, receiving from the business software application a request to determine the value of the property of the UI element, the request being received by a rule based UI control framework (110), wherein the rule based UI control framework (110) is configured such that no changes to the business software application need to be redeployed when the framework updates the rule in a customer working site;
- determining the rule which has been stored in association with the UI element of the request, the determination being executed by the rule based UI control framework (110),
- retrieving the determined rule from the storage medium by the rule engine,
- retrieving said retrieved rule from the rule engine by a runtime service (114), the runtime service being a service which is executed at runtime of the business software application,
- evaluating, at runtime of the business software application, the rule to determine the value of the property of the UI element, the evaluation being executed by the runtime service, wherein evaluating the rule comprises taking into consideration of context information (104), the context information comprising application parameters and business context available for the UI element, the application parameters being contained in the application and the business context being data objects representing data for business operations,
- setting the value of the property according to the evaluated rule at runtime of the business software application,
- returning the set value of the property to the business software application, and
- displaying the UI element by the business software application, whereby the layout of the UI element depends on the set value.

2. A machine-readable medium storing instructions adapted to be executed by a computer to perform a method comprising:
- at configuration time of an installed business software application, providing a design-time environment for defining a rule for a UI element to be displayed in the business software application, the rule affecting a value of a property of the UI element, the property being the visibility and/or the enabledness of said UI element, the UI element being coded in a building block capable of being reused in another software application, wherein no changes to the business software application need to be redeployed for updating the rule in a customer working site;
- persisting the rule in a rule engine, thereby storing the rule in a storage medium in association with the UI element,
- identifying the rule having been stored by the rule engine in the storage medium in association with said UI element,
- retrieving, by the rule engine, the rule having been stored in association with said UI element,
- at runtime, receiving from the business software application a request to determine the value of the property of the UI element,
- retrieving the rule from the rule engine by a runtime service, the runtime service being a service executed at runtime of the business software application,
- evaluating the rule to determine the value for the property of the UI element, the evaluation being executed by the runtime service, wherein the rule takes into consideration of context information (104), wherein the context information includes application parameters contained in the application and business context available for the UI element, the business context being data objects representing data for business operations,
- setting the value of the property according to the evaluated rule, and
- returning the set value of the property to the business software application for displaying the UI element according to the set value.

3. The machine-readable medium of claim 2, wherein the rule engine also persist logic controlling the application UI.

4. The machine-readable medium of claim 2, wherein design-time environment (116) further includes functions for removing the association between the rule of the UI element and the UI element and/or includes functions for binding and/or rebinding the rule and the UI element.

5. The machine-readable medium of claim 2, the runtime service (114) modifies a layout of the UI by processing the rule, the result of the processing depending on the corresponding application parameter values and business context values as defined in the rule.

## Patentansprüche

1. Verfahren zum Bereitstellen der regelbasierten Benutzeroberflächen-(UI) -steuerung für eine Geschäftssoftwareanwendung (102), das aufweist:
- Definieren einer Regel für ein UI-Element, wobei das genannte UI-Element in der Geschäftssoftwareanwendung anzuzeigen ist, wobei die Geschäftssoftwareanwendung eine entwickelte oder eingesetzte Softwareanwendung (102) ist, wobei das UI-Element in einem Baustein codiert ist, der in einer anderen Softwareanwendung wiederverwendet werden kann, wobei die Regel einen Wert einer Eigenschaft des UI-Elements bestimmt, wobei die Eigenschaft die Gestaltung des UI-Elements vorgibt, wobei die Eigenschaft die Sichtbarkeit und/oder die Aktiviertheit des genannten UI-Elements ist,
- Speichern der Regel durch eine Regel-Engine in einem Speichermedium, wobei die Regel in Verbindung mit dem genannten UI-Element, für das die Regel definiert wurde, gespeichert wird,
- bei Laufzeit Empfangen einer Anforderung zum Bestimmen des Werts der Eigenschaft des UI-Elements von der Geschäftssoftwareanwendung, wobei die Anforderung durch einen regelbasierten UI-Steuerungsrahmen (110) empfangen wird, wobei der regelbasierte UI-Steuerungsrahmen (110) so konfiguriert ist, dass keine Änderungen an der Geschäftssoftwareanwendung erneut eingesetzt werden müssen, wenn der Rahmen die Regel an einem Kundenbetriebsstandort aktualisiert,
- Bestimmen der Regel, die in Verbindung mit dem UI-Element der Anforderung gespeichert wurde, wobei die Bestimmung durch den regelbasierten UI-Steuerungsrahmen (110) ausgeführt wird,
- Abrufen der bestimmten Regel aus dem Speichermedium durch die Regel-Engine,
- Abrufen der genannten abgerufenen Regel aus der Regel-Engine durch einen Laufzeitdienst (114), wobei der Laufzeitdienst ein Dienst ist, der bei Laufzeit der Geschäftssoftwareanwendung ausgeführt wird,
- Auswerten der Regel bei Laufzeit der Geschäftssoftwareanwendung zum Bestimmen des Wertes der Eigenschaft des UI-Elements, wobei die Auswertung durch den Laufzeitdienst ausgeführt wird, wobei das Auswerten der Regel das Berücksichtigen von Kontextinformationen (104) aufweist, wobei die Kontextinformationen Anwendungsparameter und Geschäftskontext aufweisen, die für das UI-Element verfügbar sind, wobei die Anwendungsparameter in der Anwendung enthalten sind und der Geschäftskontext Daten für Geschäftsabläufe repräsentierende Datenobjekte sind,
- Festsetzen des Werts der Eigenschaft gemäß der ausgewerteten Regel bei Laufzeit der Geschäftssoftwareanwendung,
- Zurückführen des festgesetzten Werts der Eigenschaft an die Geschäftssoftwareanwendung und
- Anzeigen des UI-Elements durch die Geschäftssoftwareanwendung, so dass die Gestaltung des UI-Elements vom festgesetzten Wert abhängt.

2. Maschinenlesbare Mediumspeicheranweisungen, die zum Ausführen durch einen Computer zum Durchführen eines Verfahrens ausgeführt sind, das aufweist:
- zur Konfigurationszeit einer installierten Geschäftssoftwareanwendung Bereitstellen einer Entwurfszeitumgebung zum Definieren einer Regel für ein in der Geschäftssoftwareanwendung anzuzeigendes UI-Element, wobei die Regel einen Wert einer Eigenschaft des UI-Elements beeinflusst, wobei die Eigenschaft die Sichtbarkeit und/oder die Aktiviertheit des genannten UI-Elements ist, wobei das UI-Element in einem Baustein codiert ist, der in einer anderen Softwareanwendung wiederverwendet werden kann, wobei zum Aktualisieren der Regel an einem Kundenbetriebsstandort keine Änderungen der Geschäftssoftwareanwendung wiedereingesetzt werden müssen;
- Persistieren der Regel in einer Regel-Engine, wodurch die Regel in einem Speichermedium in Verbindung mit dem UI-Element gespeichert wird,
- Identifizieren der Regel, die von der Regel-Engine in Verbindung mit dem genannten UI-Element im Speichermedium gespeichert wurde,
- Abrufen der in Verbindung mit dem genannten UI-Element gespeicherten Regel durch die Regel-Engine,
- bei Laufzeit Empfangen einer Anforderung von der Geschäftssoftwareanwendung zum Bestimmen des Werts der Eigenschaft des UI-Elements,
- Abrufen der Regel aus der Regel-Engine durch einen Laufzeitdienst, wobei der Laufzeitdienst ein bei Laufzeit der Geschäftssoftwareanwendung ausgeführter Dienst ist,
- Auswerten der Regel zum Bestimmen des Werts der Eigenschaft des UI-Elements, wobei die Auswertung durch den Laufzeitdienst ausgeführt wird, wobei die Regel Kontextinformationen (104) berücksichtigt, wobei die Kontextinformationen in der Anwendung enthaltene Anwendungsparameter und Geschäftskontext aufweisen, die für das UI-Element verfügbar sind, wobei der Geschäftskontext Daten für Geschäftsabläufe repräsentierende Datenobjekte sind,
- Festsetzen des Werts der Eigenschaft gemäß der ausgewerteten Regel und
- Zurückführen des festgesetzten Werts der Eigenschaft an die Geschäftssoftwareanwendung zum Anzeigen des UI-Elements gemäß dem festgesetzten Wert.

3. Maschinenlesbares Medium nach Anspruch 2, wobei die Regel-Engine auch die Anwendungs-UI steuernde Logik persistiert.

4. Maschinenlesbares Medium nach Anspruch 2, wobei die Entwurfszeitumgebung (116) ferner Funktionen zum Entfernen der Verbindung zwischen der Regel des UI-Elements und dem UI-Element enthält und/oder Funktionen zum Binden und/oder Wiederbinden der Regel und des UI-Elements enthält.

5. Maschinenlesbares Medium nach Anspruch 2, wobei der Laufzeitdienst (114) eine Gestaltung des UI durch Verarbeiten der Regel modifiziert, wobei das Ergebnis der Verarbeitung von den entsprechenden Anwendungsparameterwerten und Geschäftskontextwerten, wie in der Regel definiert, abhängt.

## Revendications

1. Procédé de contrôle d'une interface d'utilisateur (UI) à base de règles pour une application de logiciel commercial (102) comprenant :
- la définition d'une règle pour un élément d'interface d'utilisateur UI, ledit élément d'UI devant être affiché dans l'application de logiciel commercial, l'application de logiciel commercial étant une application de logiciel (102) développée ou déployée, l'élément d'UI étant codé dans un bloc de construction capable d'être réutilisé dans une autre application de logiciel, la règle déterminant une valeur d'une propriété de l'élément d'UI, la propriété précisant l'agencement de l'élément d'UI, la propriété étant la visibilité et/ou l'activation dudit élément d'UI,
- le stockage de la règle par un moteur de règles vers un support de stockage, la règle étant stockée en association avec ledit élément d'UI pour lequel la règle a été définie,
- lors de l'exécution, la réception à partir de l'application de logiciel commercial, d'une demande pour déterminer la valeur de la propriété de l'élément d'UI, la demande étant reçue par un cadre de contrôle d'UI basé sur des règles (110), où le cadre de contrôle d'UI basé sur des règles (110) est configuré de manière qu'aucun changement vis-à-vis de l'application de logiciel commercial n'a besoin d'être redéployé lorsque le cadre met à jour la règle dans un site de travail d'un client ;
- la détermination de la règle qui a été stockée en association avec l'élément d'UI de la demande, la détermination étant exécutée par le cadre de contrôle d'IU basé sur des règles (110),
- la récupération de la règle déterminée à partir du support de stockage par le moteur de règles,
- la récupération de ladite règle récupérée à partir du moteur de règles par un service d'exécution (114), le service d'exécution étant un service qui est exécuté au niveau de l'exécution de l'application de logiciel commercial,
- l'évaluation, à l'exécution de l'application de logiciel commercial, de la règle pour déterminer la valeur de la propriété de l'élément d'UI, l'évaluation étant exécutée par le service d'exécution, où l'évaluation de la règle comprend la prise en considération d'une information de contexte (104), l'information de contexte comprenant des paramètres d'application et un contexte commercial disponibles pour l'élément d'UI, les paramètres d'application étant contenus dans l'application et le contexte commercial étant des objets de données représentant des données pour des opérations commerciales,
- le réglage de la valeur de la propriété en fonction de la règle évaluée à l'exécution de l'application de logiciel commercial,
- le retour de la valeur réglée de la propriété vers l'application de logiciel commercial, et
- l'affichage de l'élément d'UI par l'application de logiciel commercial, ce par quoi l'agencement de l'élément d'UI dépend de la valeur réglée.

2. Support lisible par machine stockant des instructions appropriées pour être exécutées par un ordinateur pour réaliser un procédé comprenant :
- au moment de configuration d'une application de logiciel commercial installée, la fourniture d'un environnement de conception pour définir une règle pour un élément d'UI à afficher dans l'application de logiciel commercial, la règle ayant un effet sur une valeur d'une propriété de l'élément d'UI, la propriété étant la visibilité et/ou l'activation dudit élément d'UI, l'élément d'UI étant codé dans un bloc de construction capable d'être réutilisé dans une autre application de logiciel, où aucun changement vis à vis de l'application de logiciel commercial n'a besoin d'être redéployé pour mettre à jour la règle dans un site de travail de client ;
- le maintien de la règle dans un moteur de règles, stockant ainsi la règle dans un support de stockage en association avec l'élément d'UI,
- l'identification de la règle ayant été stockée par le moteur de règles dans le support de stockage en association avec ledit élément d'UI,
- la récupération par le moteur de règles de la règle ayant été stockée en association avec ledit élément d'UI,
- à l'exécution, la réception à partir de l'application de logiciel commercial d'une demande pour déterminer la valeur de la propriété de l'élément d'UI,
- la récupération de la règle à partir du moteur de règles par un service d'exécution, le service d'exécution étant un service exécuté à l'exécution de l'application de logiciel commercial,
- l'évaluation de la règle pour déterminer la valeur pour la propriété de l'élément d'UI, l'évaluation étant exécutée par le service d'exécution, où la règle prend en considération une information de contexte (104), où l'information de contexte inclut des paramètres d'application contenus dans l'application et le contexte commercial disponible pour l'élément d'UI, le contexte commercial étant des objets de données représentant des données pour des opérations commerciales,
- le réglage de la valeur de la propriété en fonction de la règle évaluée, et
- le retour de la valeur réglée de la propriété vers l'application de logiciel commercial pour afficher l'élément d'UI en fonction de la valeur réglée.

3. Support lisible par machine selon la revendication 2, dans lequel le moteur de règles maintient également un contrôle logique de l'UI d'application.

4. Support lisible par machine selon la revendication 2, dans lequel un environnement conceptuel (116) inclut en outre des fonctions pour retirer l'association entre la règle de l'élément d'UI et l'élément d'UI, et/ou inclut des fonctions pour la relation et/ou la nouvelle relation de la règle et de l'élément d'UI.

5. Support lisible par machine selon la revendication 2, le service d'exécution (114) modifie un agencement de l'UI par le traitement de la règle, le résultat de ce traitement dépendant des valeurs de paramètre d'application correspondants et d'un contexte commercial tels que définis dans la règle.
